# EUROPÄISCHE PATENTSCHRIFT

(11) **EP 0 823 276 B1**
(45) Veröffentlichungstag und Bekanntmachung des Hinweises auf die Patenterteilung: **09.04.2003**
(21) Anmeldenummer: 97111806.2
(22) Anmeldetag: 11.07.1997
(51) Int. Cl.: B01D 27/08, B01D 24/12, C02F 1/28

(54) **Filtereinrichtung mit Gewebeeinsatz**
Filter device with meshed insert
Dispositif de filtration avec élément en tissu

(30) Priorität: 06.08.1996 DE 19631687
(43) Veröffentlichungstag der Anmeldung: 11.02.1998
(73) Patentinhaber: Brita GmbH, 65232 Taunusstein (DE)
(72) Erfinder: Bairischer, Uwe, Londonderry, NH 03053 (US)
(74) Vertreter: Weber, Dieter, Dr. Dipl.-Chem.

(56) Entgegenhaltungen:
- EP-A- 0 681 994
- EP-B- 0 219 004
- DE-A- 2 917 134
- US-A- 4 378 293
- US-A- 5 049 272
- US-A- 5 505 120

## Beschreibung

Die Erfindung betrifft eine Filtereinrichtung für Flüssigkeiten mit einem mit Filtermaterial gefüllten Filterbecher, dessen Boden wenigstens eine siebartige Auslaßöffnung für die Flüssigkeit hat, und mit einem Deckel, der neben seinem Außenflansch mit einem unteren, sich nach oben verengenden und in einem Entlüftungsschlitze aufweisenden Greifteil endenden Außenteil versehen ist, in dessen Oberfläche wenigstens eine siebartige Eintrittsöffnung für die Flüssigkeit angebracht ist, und der flüssigkeitsdicht mit dem Filterbecher verbunden ist, wobei zwischen dem Filterbecher und dem Deckel ein Sieb angeordnet ist.

Es sind zahlreiche Filtereinrichtungen der vorstehend genannten Art zum Beispiel für das Filtem von Wasser bekannt, wobei als Filtermaterial lonenaustauscher und/oder Aktivkohle verwendet wird. Die bekannte Filtereinrichtung hat die Form einer Kartusche, deren Längsmittelachse vorzugsweise vertikal so angeordnet wird, daß der Deckel oben ist und sich der Boden des Filterbechers unten befindet und die Flüssigkeit, vorzugsweise das zu filtemde Wasser, oben in den Deckel einfließt und den Filterbecher unten am Boden verläßt. Die bekannte Filtereinrichtung wird in einen dafür vorgesehenen Trichter einer Wasserreinigungsvorrichtung eingesetzt, der auf einen Auffang- bzw. Sammelbehälter für gefilterte Flüssigkeit aufgesetzt und vorzugsweise oben mit einem abnehmbaren Deckel verschlossen wird. Der Benutzer füllt zum Beispiel Leitungswasser oben in den Trichter ein, welches nach Durchlaufen der Filtereinrichtung im Sammelbehälter für die Teeaufbereitung oder dergleichen verwendet werden kann.

Es sind Filterbecher und Deckel bekannt, die als Eintritts- und auch Auslaßöffnungen schmale Schlitze haben, weil diese sich spritzgießtechnich leicht herstellen lassen. Spritzgießfähiger Kunststoff wird für solche Filtereinrichtungen vorzugsweise verwendet.

Für eine möglichst effektive Filterwirkung ist es erwünscht, der durch die Filtereinrichtung eintretenden Flüssigkeit eine möglichst große Oberfläche an Filtermaterial anzubieten bzw. die Flüssigkeit zu zwingen, sich einer möglichst intensiven und umfangreichen Adsorptionstätigkeit zu unterziehen. Bekanntlich erhält man bei Granulaten als Filtermaterial eine umso größere Wirkoberfläche, je kleiner die Größe des einzelnen Filterteilchens ist. Es kann vorkommen, daß in dem Filtermaterial Teilchen von etwa 200 µm und kleiner vorhanden sind. Die der zu filtemden, durchlaufenden Flüssigkeit angebotene Wirkoberfläche ist damit erfreulich groß. Dieser Vorteil ist aber mit dem Nachteil verbunden, daß einige dieser kleinsten Granulatpartikel durch die Eintrittsöffnungen im Deckel und die Auslaßöffnungen im Boden hindurchtreten. Die dann teilweise auf der Flüssigkeitsoberfläche schwimmenden Partikel, zum Beispiel schwarze Aktivkohleteilchen, stören den Benutzer und sind unerwünscht

Der Hersteller solcher Filtereinrichtungen hat selbstverständlich eine Verkleinerung der Eintrittsund Auslaßöffnungen versucht. Bei der spritztechnisch gut beherrschbaren Schlitzform für diese Öffnungen ist es aber reproduzierbar und kontrolliert nicht gelungen, die Breite der Schlitze mit Genauigkeit kleiner als 200 µm zu gestalten. Insbesondere Aktivkohlepartikel können Plättchenform haben, deren Minimalmaß 250 µm oder weniger erreichen kann, so daß gerade diese optisch für den Endbenutzer gut sichtbaren Partikel durch die Eintritts- und Austrittsschlitze hindurchgelangen können, welche spritzgußtechnisch bereits die Untergrenze darstellen.

Man ist bereits dazu übergegangen, ebene Siebgewebe in Form von Vliesen auf die innere Oberfläche des Bodens eines Filterbechers aufzulegen und hat dadurch auch schon den Austritt kleinerer Partikel verhindert. Mit Nachteil sammeln sich aber Keime an solchen Vliesen und zum Beispiel aus Papierstoff hergestellten Siebgeweben an.

Es gibt auch bereits aus Kunststoff eingespritzte Siebgewebe geringer Porengröße von zum Beispiel 200 µm, die man versuchsweise zum Zurückhalten des Filtermaterials an der Ober- und Unterseite des Filterbechers anzuordnen versucht hat. Dabei hat es in bislang nicht erklärbarem Ausmaß Schwierigkeiten beim Durchfluß der Flüssigkeit bei dieser Art Siebe gegeben.

Eine Filtereinrichtung der eingangs genannten Art ist in ähnlicher Weise aus der US-A-5,049,272 bekannt. Das dort nicht näher beschriebene Sieb ist der Form des sich nach oben verengenden Außenteils angepaßt und hat deshalb Kegelstumpfform. In der Mitte hat das Sieb ein Loch, welches dem Querschnitt des Greifteiles entspricht, das oben am Außenteil angesetzt ist Das von dem Sieb zurückgehaltene Filtermaterial kann durch das Loch in das Greifteil gelangen, welches mit Entlüfungsschlitzen einer Breite von ungefähr 0,3 mm versehen ist. Alle Teilchen ≤ 0,3 mm können durch die Schlitze entweichen.

Aus der US-A-5,505,120 ist eine Kaffeemaschine bekannt, bei im Abstand über der Auffangkanne ein becherförmiger Filter vorgesehen ist, der in die mit Kaffeepulver unten gefüllte Papierfiltertüte einsetzbar ist und in den oben Wasser über ein Filterbett eingegossen wird. Das Wasser wird in dem Filterbett gereinigt/gefiltert und tritt von dort in das Kaffeepulver ein. Das Filterbett nimmt den gesamten Querschnitt des Filters ein und besteht aus einer unteren sowie oberen Filterscheibe mit Löchern, innerhalb deren jeweils eine Sieb- oder Filtereinlage eingelegt ist. Das Filtermaterial liegt zwischen der unteren und oberen Sieb-Filtereinlage. Das Filtermaterial füllt den konkav gebogenen, zylinderförmigen Raum prall aus, so daß von Beginn bis Ende des Betriebes dieses Filterbettes das Filtermaterial auf der gesamten Querschnittsfläche an die innere Oberfläche der Siebfiltereinlage gedrückt ist.

Bei der US-A-4,378,293 ist bei einer Reinigungsvorrichtung für Haushaltswasser eine Kartusche beschrieben, deren Filtermaterial zwischen konkav gewölbten, perforierten Stützteilen gehalten ist. Zu filtemde Flüssigkeit dringt von außen in einen durch diese konkave Stützfläche gebildeten Raum ein und strömt dann durch die einzelnen Löcher in das Filtermaterial. Als Grund für die konkave Ausgestaltung der Stützfläche wird angegeben, daß einerseits ein Verstopfen der Löcher durch Teilchen vermieden wird, weil sich diese in dem Vorraum sammeln können; und daß andererseits ein Kammerbereich geschaffen wird, in welchem Turbulenzen zerstört und aufgelöst werden mit der Folge, daß sich der Auswasch- oder Kanalisierungseffekt im Filterbett nicht ausbildet und somit eine bessere Filterwirkung entsteht.

Bei Aufrechterhaltung einer einwandfreien Funktionstätigkeit der eingangs genannten Filtereinrichtung liegt der Erfindung die Aufgabe zugrunde, Verbesserungen vorzusehen bzw. Maßnahmen dahingehend zu treffen, daß auch kleine Granulatpartikel von zum Beispiel ≤ 200 µm Breite nicht durch die Öffnungen im Deckel austreten können und dennoch der Durchfluß der Flüssigkeit nicht reduziert oder gar blockiert wird.

Diese Aufgabe wird gemäß der Erfindung mit einer Filtereinrichtung mit den Merkmalen des Anspruchs 1 gelöst. Das Filtermaterial wird bei der Herstellung der Filtereinrichtung mehr oder weniger trocken in den Filterbecher bis zu dem erwähnten Füllgrad eingefüllt, um freies Volumen für das Aufquellen vorzusehen, wenn das Filtermaterial feucht wird. Durch das Anordnen eines Gewebeeinsatzes als Sieb können kleinere Poren vorgesehen werden, welche dem gesamten Filtermaterial beim Hochschwemmen durch Flüssigkeit entgegensteht, weil der Gewebeeinsatz den gesamten Querschnitt des Deckels einnimmt. Das Rückhaltevermögen ist dadurch entscheidend verbessert, und durch das Vorstehen des Gewebeeinsatz wenigstens teilweise in den Filterbecher hinein wird überraschend ein guter Durchfluß gewährleistet, denn der Durchfluß der zu filternden Flüssigkeit wird weder reduziert noch blockiert.

Durch den oberen Rand eines Bechers, insbesondere des hier betrachteten Filterbechers, kann man sich eine Ebene gelegt denken, längs welcher der Deckel mit dem Filterbecher flüssigkeitsdicht verschlossen wird. Würde man einen ebenen Gewebeeinsatz zwischen Filterbecher und Deckel etwa im Bereich dieser gedachten Ebene anordnen, dann ergäben sich Fließprobleme der zu filtemden Flüssigkeit. Man kann verstehen, daß über dem in der zu filternden Flüssigkeit eingetauchten Deckel eine nicht allzu hohe Flüssigkeitssäule steht, so daß der Druck der Flüssigkeit durch die Schwerkraft nicht allzu groß ist. Außerdem ist die Oberflächenspannung einer Flüssigkeit bekannt, die sich besonders bei kleinen Siebporen negativ dahingehend auswirkt, daß der geringste Luftgegendruck unterhalb des Deckels ausreicht, um den Durchfluß der Flüssigkeit sogar zu blockieren. Die Verwendung eines ebenen Gewebeeinsatzes könnte einen solchen Mangel nicht beheben.

Erfindungsgemäß ist nun ein Gewebeeinsatz vorgeschlagen, der wenigstens ein Gewebeteil bzw. einen Bereich seines Siebgewebes hat, welcher aus der erwähnten Ebene in den Filterbecher hinein vorsteht bzw. in Richtung auf das Filtermaterial herausragt Beim Füllen des Filterbechers mit Filtermaterial bis "fast zum Rand", d.h. zu 85% oder bis zu 95%, wird dieses vorstehende Gewebeteil des neuen Gewebeeinsatzes nach der Erfindung Berührung mit dem Filtermaterial haben und dadurch an dieser Stelle die Oberflächenspannung aufbrechen mit der Folge, daß die Flüssigkeit hier zu fließen beginnt, ein etwaiges Luftpolster unter dem Deckel herausdrückt und damit einen etwaigen Gegendruck gegen den Druck der Flüssigkeitssäule erheblich vermindert und schließlich abbaut. Die zu filternde Flüssigkeit kann ohne Probleme durch das Filtermaterial strömen und die kleinen Partikel des Filtermaterials werden gleichwohl in hervorragender Weise zurückgehalten.

Es ist erfindungsgemäß besonders vorteilhaft, wenn das vorstehende Gewebeteil wenigstens teilweise gewölbt ist. Es ist bekannt, Gewebeteile herzustellen, mit einer Struktur etwa wie bei einer Gaze, nur daß im Falle der Erfindung das Gewebe vorzugsweise aus Kunststoff besteht. Es versteht sich, daß auch wenn der Kunststoff nicht gewebt ist, dennoch das Wort "Gewebe" für diesen netzartigen Siebaufbau verwendet wird. Dünne Kunststoffäden kreuzen sich quer oder schräg und schaffen dadurch Poren einer Größe, wie sie bei den Schlitzen spritzgießtechnisch nicht mehr kleiner hergestellt werden können.

Wie eine Gaze kann man auch das Gewebeteil aus Kunststoff in verschiedene Flächenformen bringen. Unter Wölbung wird eine beliebige Krümmung der Fläche verstanden, so daß man auch an kaffeefilterförmige Gewebeteile, kegelstumpfförmige Gewebeteile oder dergleichen denken kann.

Besonders bevorzugt ist es dabei, wenn erfindungsgemäß das Gewebeteil die Gestalt eines Kugelabschnittes hat und an einem Haltering befestigt ist Der Kugelabschnitt entsteht bekanntlich durch Schnitt einer Kugel längs einer Ebene. Diese Ebene schneidet die Kugel längs eines Kleinkreises, durch welche die Kugelkappe vorgegeben wird, die man auch als Kugelhaube oder Kalotte bezeichnen kann. Der Haltering liegt dann längs des Kleinkreises dieses hauben- bzw. kappenartigen Gewebeteils. Der Haltering liegt in der Ebene, aus der sich das kugelkappenförmige Gewebeteil auf das Filtermaterial hin heraushebt.

Insbesondere herstellungstechnisch ist es vorteilhaft, wenn nach einer weiteren Ausgestaltung der Erfindung das Gewebeteil an Rippen angebracht ist. Die Rippen bestehen vorzugsweise aus dem gleichen Kunststoff wie die anderen Teile (Becher, Siebdeckel etc.) oder einem verträglichen Material, so daß man das Siebgewebe zwischen die Rippen einspritzen kann. Die Rippen können der gewölbten oder anderweitig ausgestalteten Form des in den Filterbecher hineinragenden Gewebeteils folgen und diese Form stabilisieren. Dies ist besonders bei maximal mit Filtermaterial gefüllten Filterbechem von Vorteil, bei denen nach dem Füllen eine Art Schüttkegel mit einem erhabenen Bereich in der Mitte nach oben so vorsteht, daß das kugelkappenförmige Gewebeteil, wenn es auf den freien oberen Rand des Filterbechers aufgesetzt wird, eine gewisse Druckkraft erfährt, die ein sehr feines Gewebeteil verformen könnte. Die formhaltenden Rippen widerstehen dieser kleinen Druckkraft und halten das vorstehende Gewebeteil recht präzise in seiner Gestalt.

Bei weiterer vorteilhafter Ausgestaltung der Erfindung ist das am weitesten in den Filterbecher vorstehende Gewebeteil von einer Ringrippe umgeben.Besonders günstig wirkt häufig die Berührung zwischen dem vorstehenden Gewebeteil einerseits und dem eingefüllten Filtermaterial andererseits, wenn nicht eine Rippe sondern das Gewebeteil selbst mit dem Filtermaterial in Berührung kommt, weil die Flüssigkeit auf dem Gewebeteil selbst liegt und ihre Oberflächenspannung gebrochen werden soll. Bei den automatischen Befüllungsanlagen von Filterbechem bilden sich bisweilen eine Art Schüttkegel, deren am weitesten nach oben hervorstehender Bereich sich etwa in der Mitte befindet. Wird nun in diesem betrachteten Beispiel ein kugelkappenförmiges Gewebeteil verwendet, dann wird der am weitesten nach unten vorstehende Punkt, wie der Pol auf dieser Kugelkappe, zuerst mit dem Filtermaterial in Berührung kommen.Die hier beschriebene Ringrippe sorgt dafür, daß der am weitesten vorstehende Gewebeteil mit dem Filtermaterial zuerst in Berührung kommt und nicht etwa eine Rippe. Dadurch wird das zuverlässige Aufbrechen der Oberflächenspannung begünstigt, so daß ein Blockieren der fließenden Flüssigkeit im Betrieb der erfindungsgemäßen Filtereinrichtung nicht mehr auftritt.

Es ist zweckmäßig, wenn erfindungsgemäß die Porengröße des Gewebes im Bereich von 50 µm bis 300 µm und vorzugsweise von 80 µm bis 200 µm liegt. Die Filtereinrichtung gemäß der Erfindung kann ohne Durchfließprobleme betrieben werden, wenn die Porengrößen in den vorgenannten Bereichen liegen, und dann können auch sehr effektive Filtermaterialien mit großen Wirkflächen (kleine Partikel) verwendet werden, ohne daß ein Herausrieseln oder Durchschwemmen von kleinen Partikel durch die Öffnungen zu befürchten wäre.

Es kann herstellungstechnisch vorteilhaft sein, den Deckel mit dem Gewebeeinsatz unlösbar zu verbinden. So kann der Spritzgußhersteller zum Beispiel den Deckel formen, den Gewebeeinsatz spritzgießen und diese beiden Teile flüssigkeitsdicht miteinander verbinden, zum Beispiel verschweißen. Dieses Zwischenprodukt kann dann zum Füllbetrieb geliefert werden, wo es in Magazinen zur Verfügung steht und von einer automatischen Verschließanlage ergriffen wird, um dann auf den gefüllten Filterbecher aufgesetzt und mit diesem verbunden zu werden. Weder ein Automat noch das Personal des Herstellers muß sich dann mit einzelnen Gewebeeinsätzen abgeben und diese mit besonderer Sorgfalt transportieren und anordnen. Der Deckel muß zum Verschließen des Filtereinsatzes ohnehin richtig positioniert werden, und wenn der Gewebeeinsatz unlösbar mit diesem verbunden ist, ist kein besonderer Montageschritt zusätzlich erforderlich.

Günstig ist ferner die Verwendung eines hydrophilisierten Kunststoffgewebes in einer Filtereinrichtung der vorstehend bezeichneten Art. Zur Verbesserung, d.h. zur Verkürzung der Durchflußzeit der zu filternden Flüssigkeit ist es zweckmäßig, das Siebgewebe aus Kunststoff mit Stoffen zu behandeln, durch welche das Gewebe hydrophiler wird. Bei diesen Stoffen kann es sich um Flüssigkeiten handeln, durch welche die Oberfläche des Kunststoffs beeinflußt wird.

In änlicher Weise kann man erfindungsgemäß auch ein bakteriostatisch behandeltes Kunststoffgewebe in der vorgenannten Filtereinrichtung verwenden. Hier gibt es verschiedene Verfahren, zu denen auch die Einwirkung von Dämpfen, das Bestrahlen und dergleichen gehören.

Weitere Vorteile, Merkmale und Anwendungsmöglichkeiten der vorliegenden Erfindung ergeben sich aus der folgenden Beschreibung einer bevorzugten Ausführungsform in Verbindung mit den anliegenden Zeichnungen. Bei diesen zeigen:
- Figur 1: eine Querschnittsansicht durch die Filtereinrichtung gemäß der Erfindung,
- Figur 2: eine Draufsicht auf den Gewebeeinatz von der Seite des Filterbechers her und
- Figur 3: eine Querschnittsansicht durch den Deckel mit daran angebrachtem Gewebeeinsatz.

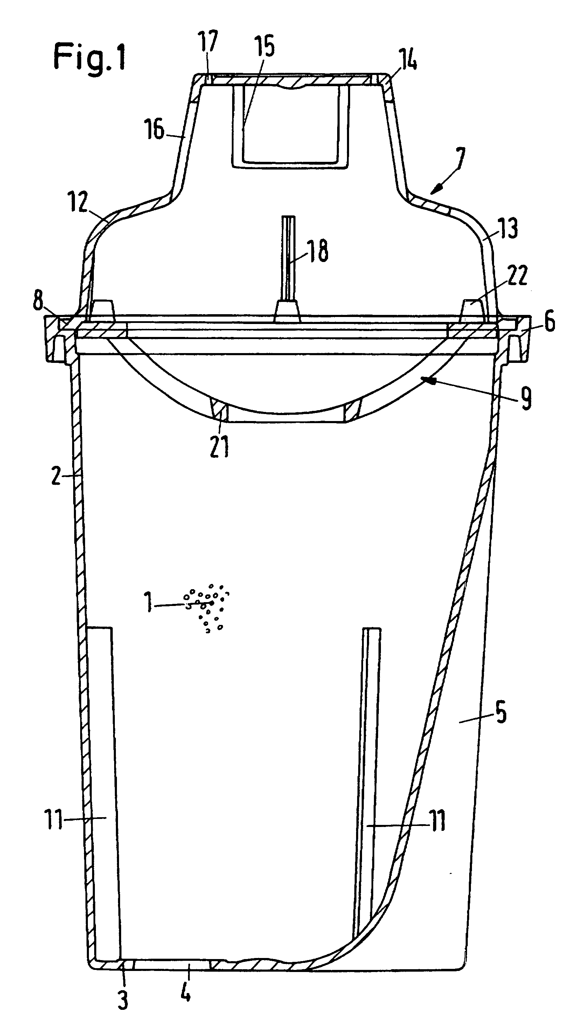

Die in Figur 1 insgesamt im Querschnitt dargestellte Filtereinrichtung nach einer bevorzugten Ausführungsform der Erfindung besteht als Unterteil aus einem mit kömigem Filtermaterial 1 gefüllten Filterbecher 2, dessen Boden 3 Auslaßöffnungen 4 mit nicht dargestellten Siebeinrichtungen hat und an einer Stelle unter Bildung einer Entlüftungskerbe 5 schräg nach innen hochgezogen ist. Die Seitenwände des Filterbechers 2 enden oben in einem Dichtflansch 6, der eine gedachte, horizontale Ebene einschließt; die Filtereinrichtung besteht femer aus dem allgemein mit 7 bezeichneten Deckel, dessen äußerer, unterer Flansch 8 mit derselben gedachten, horizontalen Ebene abschließt und in den Dichtflansch derart passend eingelegt ist, daß eine flüssigkeitsdichte Verbindung, zum Beispiel ein Verschweißen, leicht möglich ist. Außer dem Filterbecher 2 und dem auf diesen aufgesetzten Deckel 7 weist die Filtereinrichtung der hier gezeigten Ausführungsform als dritten Teil auch noch einen Gewebeeinsatz 9 auf, der einen Haltering 10 hat, welcher ebenfalls die gedachte, horizontale Ebene einschließt. Dadurch paßt der Haltering 10 des Gewebeeinsatzes 9 zum Deckel 7 und dem Filterbecher 2 in solcher Weise, daß im Bereich der gemeinsamen Verbindungsebene die drei Teile flüssigkeitsdicht miteinander verbunden, zum Beispiel verschweißt werden können.

Im Filterbecher erkennt man zusätzlich Stapelrippen 11, die sich etwa über die halbe Höhe des Filterbechers 2 vom Boden 3 aus nach oben erstrecken und an den Seitenwänden innen winkeling gleichmäßig verteilt zum Beispiel zu dritt angeordnet sind. Die fertigen Filterbecher 2 werden auf diese Stapelrippen 11 nach dem Ineinanderstecken zur Lagerung aufgesetzt Vor der Montage der Filtereinrichtung können die leeren Filterbecher 2 daher in stangenförmigen Stapeln im Magazin gelagert werden.

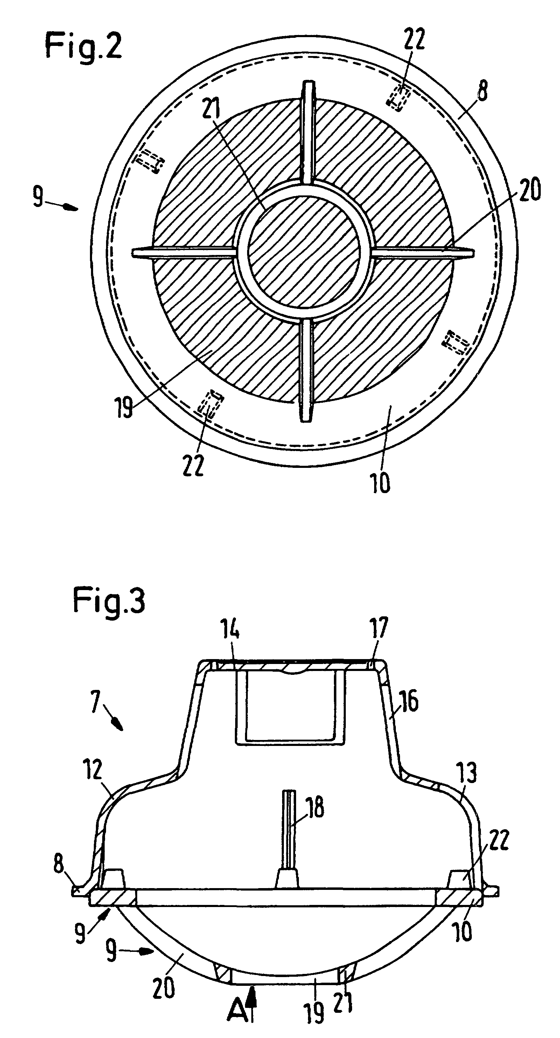

Der Deckel 7 besteht aus einem unteren Außenteil 12 neben dem Außenflansch 8, In dessen Oberfläche kranzartig Eintrittsöffnungen 13 für die zu filtemde Flüssigkeit angeordnet sind. Der jeweilige Vertikalschnitt durch den Deckel 7 nach den Figuren 1 und 3 ist so gelegt, daß er auf der rechten Seite gerade durch eine Eintrittsöffnung 13 verläuft.

Dieser äußere Teil 12 des Deckels 7 verengt sich nach oben und endet in einem Greifteil 14 mit einer Greifmulde 15 und mit Entlüftungsschlitzen 16 sowie einigen darüber angeordneten Entlüfungslöchern 17, durch welche im Betrieb von unten hochsteigende Luft nach außerhalb der Filtereinrichtung entweichen kann. Schließlich erkennt man auf der inneren Oberfläche des Deckels 7 Halterippen 18, durch welche eine Auflagefläche für den Gewebeeinsatz 9 im Deckel 7 geschaffen wird.

Der in Draufsicht auf Figur 3 von unten in Richtung des Pfeiles A in der Mitte hauptsächlich sichtbare Gewebeeinsatz 9 besteht aus dem kugelkappenförmigen Gewebeteil 19, welches durch Schrägschraffur angedeutet ist und mit einer gazeförmigen Struktur zu denken ist. Die gesamte schraffierte Fläche des Siebgewebes stellt das in Richtung des Filtermaterials 1 nach unten vorstehende, gewölbte Gewebeteil 19 dar, welches in den ebenen Haltering 10 eingespritzt ist. Rippen 20 mit der zentral angeordneten Ringrippe 21 sind ebenfalls an dem Gewebeteil 19 angespritzt und haltern dieses formstabil als Kugelkappe.

Auf der der Wölbung nach unten zum Filterbecher 2 hin abgewandten Seite, also in den Figuren 1 und 3, welche auch die Betriebsform darstellen, nach oben, sind am Umfang gleichmäßig verteilt vier Positioniernoppen 22 am Haltering 10 angebracht, die so nach oben vorstehen, daß sie auf die Auflagefläche der vier Halterippen 18 im Deckel 7 stoßen, wenn sich der Haltering 10 in der richtigen Position befindet Diese ist in den Figuren dargestellt.

Nach Fertigstellung des Filterbechers 2, des Deckels 7 und des Gewebeeinsatzes 9 kann der Gewebeeinsatz in die in Figur 3 dargestellte Position gebracht werden, in welcher die Positionierungsnoppen 22 gegen die Halterippen 18 in Anlage gebracht sind und sich der Haltering 10 im Umfangsflansch 8 des Deckels 7 befindet. In dieser Anordnung wird der Gewebeeinsatz 9 am Deckel 7 flüssigkeisdicht angeschweißt.

Der Filterbecher 2 wird mit Filtermaterial 1 gefüllt, wonach der Deckel 7 in die in Figur 1 gezeigte Position gebracht und der Flansch 8 am Dichtflansch 6 flüssigkeitsdicht verschweißt wird.

Die auf diese Weise gefertigte Filtereinrichtung der Figur 1 kann dann in ein Filtergerät eingesetzt und vom Endverbraucher benutzt werden. Die oben eingegossene Flüssigkeit, vorzugsweise zu filterndes Wasser, tritt durch die auch als Siebschlitze bezeichneten Flüssigkeitseintrittsöffnungen 13 des Deckels 7 ein, durchströmt den Gewebeeinsatz 9, das Filtermaterial 1 und verläßt den Filterbecher 2 durch die Auslaßöffnung 4, die durch ein Sieb das Filtermaterial 1 ebenfalls zurückhält.

## Patentansprüche

1. Filtereinrichtung für Flüssigkeiten mit einem mit Filtermaterial (1) gefüllten Filterbecher (2) dessen Boden (3) wenigstens eine siebartige Auslaßöffnung (4) für die Flüssigkeit hat, und einem Deckel (7), der neben seinem Außenflansch (8) mit einem unteren, sich nach oben vor engenden und in einem Entlüftungsschlitze (16) aufweisenden Greifteil (14) endenden Außen teil (12) versehen ist, in dessen Oberfläche wenigstens eine siebartige Eintrittsöffnung (13) für die Flüssigkeit angebracht ist, und der flüssigkeitsdicht mit dem Filterbecher (2) verbunden ist, wobei zwischen dem Filterbecher (2) und dem Deckel (7) ein Gewebeeinsatz (9) angeordnet ist, der sich im Bereich der Verbindungsebene von Filterbecher (2) und Deckel (7) über den gesamten Querschnitt erstreckt, wobei der Gewebeeinsatz (9) wenigstens ein Gewebeteil (19) aufweist, das aus der Verbindungsebene in den Filterbecher (2) hinein vorsteht, und wobei der Füllgrad des Filterbechers (2) mit Filtermaterial (1) 85% bis 95% des Becherinnenvolumens beträgt.

2. Filtereinrichtung nach Anspruch 1, **dadurch gekennzeichnet, daß** das vorstehende Gewebeteil (19) wenigstens teilweise gewölbt ist.

3. Filtereinrichtung nach Anspruch 1 oder 2, **dadurch gekennzeichnet, daß** das Gewebeteil (19) die Gestalt einer Kugelkappe hat und an einem Haltering (10) befestigt ist.

4. Filtereinrichtung nach einem der Ansprüche 1 bis 3, **dadurch gekennzeichnet, daß** das Gewebeteil (19) an Rippen (20) angebracht ist.

5. Filtereinrichtung nach einem der Ansprüche 1 - 4, **dadurch gekennzeichnet, daß** das am weitesten in den Filterbecher (2) vorstehende Gewebeteil (19) von einer Ringrippe (21) umgeben ist.

6. Filtereinrichtung nach einem der Ansprüche 1 bis 5, **dadurch gekennzeichnet, daß** die Porengröße des Gewebes (19) im Bereich von 50 µm bis 300 µm und vorzugsweise von 80 µm bis 200 µm liegt.

7. Filtereinrichtung nach einem der Ansprüche 1 bis 6, **dadurch gekennzeichnet, daß** der Deckel (7) mit dem Gewebeeinsatz (9) unlösbar verbunden ist.

8. Filtereinrichtung nach einem der Ansprüche 1 bis 7, **dadurch gekennzeichnet, daß** der Gewebeeinsatz (9) eine hydrophilisierten Kunststoffgewebe aufweist.

9. Filtereinrichtung nach einem der Ansprüche 1 bis 7, **dadurch gekennzeichnet, daß** der Gewebeeinsatz (9) eine bakteriostatisch behandeltes Kunststoffgewebe aufweist

## Claims

1. Filter means for liquids with a filter cup (2) filled with filter material (1), the base (3) of which has at least one sieve-like outlet aperture (4) for the liquid, and with a lid (7) which, in addition to its external flange (8), is provided with a bottom external part (12) narrowing towards the top and ends in a gripping part (14) with a venting slit (16), to the surface of which at least one sieve-like inlet aperture (13) for the liquid is attached, and which is joined in a liquid-tight manner to the filter cup (2), a fabric insert (9) being arranged between the filter cup (2) and the lid (7), which extends in the area of the connecting plane of filter cup (2) and lid (7) over the total diameter, the fabric insert (9) having at least one fabric piece (19) projecting from the connecting plane into the filter cup (2), and the fill level of the filter cup (2) with filter material (1) being 85% to 95% of the internal volume of the cup.

2. Filter means according to claim 1, **characterized in that** the projecting fabric piece (19) is at least partially dome-shaped.

3. Filter means according to claim 1 or 2, **characterized in that** the fabric piece (19) has the shape of a sphere cap and is fixed to a retaining ring (10).

4. Filter means according to one of claims 1 to 3, **characterized in that** the fabric piece (19) is fitted onto ribs (20).

5. Filter means according to one of claims 1-4, **characterized in that** the fabric piece (19) projecting furthest into the filter cup (2) is surrounded by an annular rib (21).

6. Filter means according to one of claims 1 to 5, **characterized in that** the pore size of the fabric (19) is in the range from 50 µm to 300 µm and preferably from 80 µm to 200 µm.

7. Filter means according to one of claims 1 to 6, **characterized in that** the lid (7) is joined in a non-removable manner to the fabric insert (9).

8. Filter means according to one of claims 1 to 7, **characterized in that** the fabric insert (9) has a hydrophilized plastics fabric.

9. Filter means according to one of claims 1 to 7, **characterized in that** the fabric insert (9) has a bacteriostatically treated plastics fabric.

## Revendications

1. Dispositif de filtrage pour liquides comportant un récipient de filtrage (2) rempli de matière de filtrage (1), dont le fond (3) comporte au moins une ouverture d'écoulement (4) de type tamis, et un couvercle (7) qui est doté près de son bord extérieur (8) d'une pièce extérieure inférieure (12) qui se rétrécit vers le haut et se termine par une partie de préhension (14) comportant des fentes de passage d'air (16) et dans la surface de laquelle est ménagée au moins une ouverture d'entrée (13) de type tamis pour le liquide et qui est reliée de façon étanche au liquide au récipient de filtrage, une pièce rapportée en tissu (9) étant disposée entre le récipient de filtrage (2) et le couvercle (7) et s'étendant au niveau de la liaison entre le récipient (2) et le couvercle (7) sur toute la section, la pièce rapportée en tissu (9) comportant au moins une partie en tissu (19) qui dépasse du plan de liaison dans le récipient de filtrage, et le degré de remplissage du récipient de filtrage (2) en matériau de filtrage (1) étant compris entre 85% et 95% du volume intérieur du récipient.

2. Dispositif de filtrage selon la revendication 1, **caractérisé en ce que** la partie en tissu saillante (19) est incurvée au moins partiellement.

3. Dispositif de filtrage selon la revendication 1 ou 2, **caractérisé en ce que** la partie en tissu (19) a la forme d'un segment sphérique et est fixée à une bague de retenue.

4. Dispositif de filtrage selon l'une des revendications 1 à 3, **caractérisé en ce que** la partie en tissu (19) est montée sur des nervures (20).

5. Dispositif de filtrage selon l'une des revendications 1 à 4, **caractérisé en ce que** la partie en tissu (19) saillant dans une très large mesure dans le récipient de filtrage (2) est entourée par une rainure annulaire (21).

6. Dispositif de filtrage selon l'une des revendications 1 à 5, **caractérisé en ce que** la taille des pores du tissu (19) est comprise entre 50 µm et 300 µm et de préférence entre 80 µm et 200 µm.

7. Dispositif de filtrage selon l'une des revendications 1 à 6, **caractérisé en ce que** le couvercle (7) est relié de façon inamovible à la pièce rapportée en tissu (9).

8. Dispositif de filtrage selon l'une des revendications 1 à 7, **caractérisé en ce que** la pièce rapportée en tissu (9) comporte un tissu synthétique hydrophilisé.

9. Dispositif de filtrage selon l'une des revendications 1 à 7, **caractérisé en ce que** la pièce rapportée en tissu (9) comporte un tissu synthétique traité de façon bactériostatique.
